# EUROPEAN PATENT SPECIFICATION

(11) **EP 0 583 231 B1**
(45) Date of publication and mention of the grant of the patent: **14.10.1998**
(21) Application number: 93850153.3
(22) Date of filing: 09.08.1993
(51) Int. Cl.: A23L 1/00, C08B 30/04, A23L 1/10

(54) **Method for recovery of starch from grain**
Verfahren zur Gewinnung von Stärke aus Korn
Procédé pour la récupération d'amidon de graines

(30) Priority: 10.08.1992 SE 9202321
(43) Date of publication of application: 16.02.1994
(73) Proprietor: CHEMATUR ENGINEERING AB, S-691 27 Karlskoga (SE)
(72) Inventor: Ehnström, Lars Karl Johan, S-146 40 Tullinge (SE)
(74) Representative: Ström, Tore

(56) References cited:
- EP-A- 0 221 427
- US-A- 4 269 766
- US-A- 5 164 013

## Description

The invention relates to a method for continuous recovery of starch from grain, preferably wheat and corn.

The starch is the energy reserve of the plants and is accumulated as 0.1 to 0.01 mm particles (granules) in the plant parts. It is one of the most important raw materials for the food industry but is used also in other chemical industry where the use at present is increasing considerably. The chemical structure of the starch varies in dependence of the origine thereof but the starch consists substantially of various amounts of the linear polymer amylos and the branched polymer amylo pectin. These bio-polymers recently have received great interest as raw material for plastics having novel unique properties and in competition with the plastics based on petroleum. Since starch is a raw material which can be produced at about half the cost as that for cellulose it is also aimed at, for economical reasons, to introduce starch in new application areas.

Today starch is produced substantially from grain (wheat and corn) and root-crops for e.g. manioc, or potatoes, grain presenting most advantages from a processing point of view, viz.
- high starch content, about 60 %
- simple transport and storing
- low water content
- high by-product value.

In all commercial methods for recovery of starch from wheat it is started from wheat-flour which is produced in conventional roller mills having roller stands in several steps in order to achieve the high quality of the flour (low ash content) as required in order that the manufacturing process applied shall function satisfactorily. An exception is a German enterprise which in their starch factory uses a type of turbo-mill which is manufactured by said enterprise and which mills gently in a single step so that the quality of the flour obtained will be that desired for the process applied by the German enterprise, wherein gluten is separated before the starch separation.

There are, however, several other processes for producing starch from wheat, e.g. Martin, Batter, Fesca, Farmarco and Raiso/Alfa Laval, wherein a mixture of flour and water is homogenized and the separation of the starch is effected in a decanter centrifuge. Gluten is recovered after this separation, the so-called primary separation. Also Westfalia and Flottweg (Barr & Murphy) use a similar technique in the front end of their processes, and in these cases it has been chosen to a decanter centrifuge, which separates the starch in three phases, since the ultimate object is to recover as much starch as possible and to reduce the required flow.

When starch is recovered from corn the only process used today is the so-called "Wetmilling"-process wherein the corn kernel is steeped before continued treatment; steeping means that the kernel is softened before milling by soaking the kernel in water for 30 to 40 hs at about 50°C. The steep water consists substantially of the water which at a later stage of the process has been used when washing (refining) the starch. After steeping the water used for this treatment is evaporated and is used as a feed component. Sulphur dioxide is used in the steeping and in other steps of the process in order to prevent infection.

After the steeping gentle milling is effected and then the sprouts are separated as the light phase in hydrocyclones. The corn oil is extracted from the sprouts and the rest will be feed. The heavy phase from the hydro cyclones is cleaned from fibres and is pumped to nozzle centrifuges wherein protein (gluten) is separated, and the starch phase proceeds to a number of washing steps operating according to the countercurrent principle. The starch suspension can be modified according to several methods to end products as syrup, fructose, glucose, dextrin etc or be dried directly to so called native starch.

The methods applied at present for recovering starch from grain are suited for recovering as much starch as possible from the raw material. This requires a large number of process steps and as a consequence thereof expensive equipment, which means that the plants must be built for high capacity in order to keep the production cost at a reasonable level. However, such large plants require purifying equipment for handling the extremely difficult waste water from the process. The costs for purifying the waste flow often are 30 to 40 % of the production costs and, therefore, it is necessary to recirculate and reuse process liquids by different countercurrent methods in order to purify (wash) the starch particles. This means that dilution and wash liquids at the front end of the process have a high content of soluble and suspended material which impairs the separation and causes a risk of infection due to the fact that part of the material stays for a long time in the process under unfavourable conditions.

Document US-A-4 269 766 discloses a method for fractionating the whole wheat kernel by sequential milling.

The purpose of the present invention is to provide a pro-environmental method for recovering high quality starch from grain, which is simple and requires low supply of energy so that the production costs can be reduced.

For said purpose there is provided according to the invention a method for continuous recovery of starch from grain, wherein the grain is dry-milled in a single step, the flour obtained after separation of husk is mixed with water and the suspension obtained, possibly after homogenization is treated further in a decanter centrifuge, the method of the invention having obtained the characterizing features of claim 1.

In order to explain the invention in more detail an embodiment of the method will be described with reference to the accompanying drawings, in which
FIG. 1 is a block diagram illustrating the procedure in the method of the invention, and
FIG. 2 is a diagram illustrating a plant for working the method.

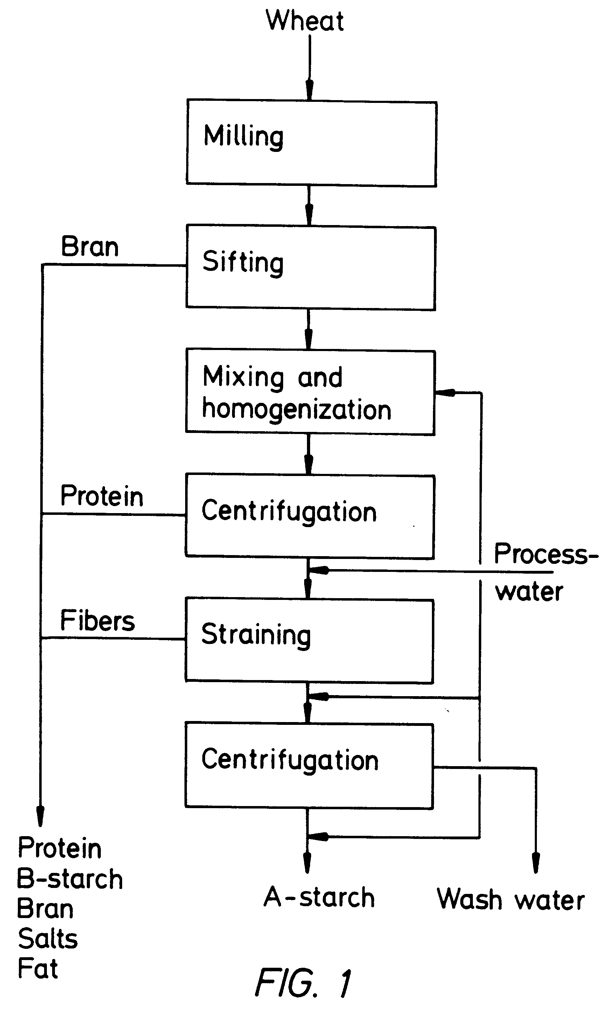

Referring to FIG. 1 dried and sifted wheat is initially gently milled in a single step, a so called turbo-mill preferably being used for milling, which provides the desired gentle treatment of the wheat supplied. The flour obtained by the milling is sifted in order to separate therefrom bran (husk) the flour then being mixed with water in the proportions 1 part flour on 1.5 parts water which can comprise cold water (at a temperature lower than 15°C) or water which has been heated to a temperature of about 30°C. The suspension thus obtained is homogenized in a disintegrator in order to release gluten, salts and fat from the starch in the flour and is then centrifuged in a decanter centrifuge wherein the suspension is separated into two fractions: a lighter fraction which contains in additon to gluten, salts, and fat also minor starch particles (B-starch) and a heavier fraction which contains substantially major starch particles (A-starch). The starch thus will be partly "spilled" to the lighter fraction. This fraction is removed from the process while the heavier fraction which by the separation of earlier supplied water has been washed in the decanter centrifuge will be treated further. The heavier fraction which has a solids content of about 50 % is diluted initially with water for following further washing of the starch and for reduction of the solids content to about 10 %, the suspension then being strained in order to separate therefrom fibres contained in the suspension. The strained suspension is now centrifuged again in a decanter centrifuge the solids content under separation of wash water being increased to about 60 %, but the pasty suspension is then diluted with water in order to reduce the solids content to 40 to 45 % so that the suspension can be handled more easily. The final product from the process thus consists of a high quality starch suspension, starch slurry, with this solids content, or can also be delivered as a paste.

As by-products in the method of the invention there is obtained bran, gluten, fibres, and salts as well as the lighter fraction of starch (B-starch), and these by-products can be mixed to a wet feed. The wash water from the last centrifugation can be used for watering fields.

When the method of the invention is applied only the easily separated high quality starch particles will be harvested while the rest, 20 to 30 %, together with the bran (husk), gluten, fibres, and salts can be used as wet feed for the production of animal foods. Much water can be used in concurrent in the process for washing the starch because the water can be used for watering fields which as a consequence thereof regain part of the nutrient salts contained in the water. The product manufactured by the method according to the invention is delivered in liquid or pasty condition, and since the water used in the process can consist of cold water no other energy is required than the electric energy consumed by electric motors for operating the devices included in the plant (and the negligible amount required for heating, if necessary, the water mixed with flour immediately after milling).

Since the treatment period from grain to final product when applying the method of the invention is only about one minute and in any case no more than two minutes and the method does not include recirculation of currents and is performed at low temperature the risk of infection of the starch suspension which is considered a fresh product, will be minimized.

For working the method described by which a high quality starch suspension (starch concentrate) is produced having a solids content of about 50 to 60 %, small plants can be used from which the starch suspension is delivered in tank trucks to a central plant which refines the starch suspension to different food and industrial products. The central plant thus will be relieved from handling the grain, milling, starch recovery and purification equipment. The small starch plants which will be satellite plants of the central plant may comprise local plants associated with farms, which can - and for the necessary productivity should - be located at sites where sufficient amount of grain is available and the wet feed produced by the plant can be marketed, and where also cold water of good quality is available for washing the starch and the wash water can be used for watering fields.

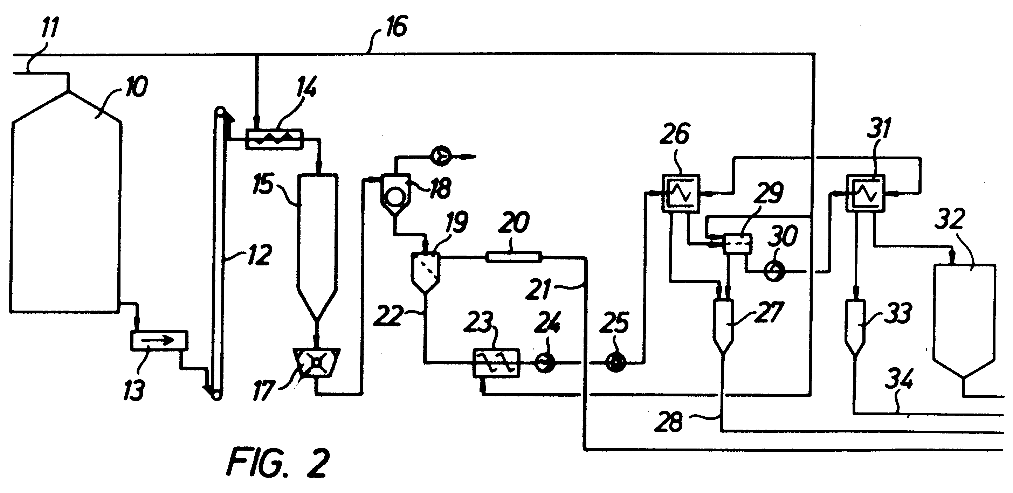

In FIG. 2 there is shown a satellite plant of the kind mentioned above. This plant comprises a storage silo 10 for wheat supplied at 11. The dried wheat is fed by means of a conveyor 12 via a sifting machine 13 which can comprise a pneumatic sift for separating sand and other impurities which may accompany the wheat, to an automatic moistening apparatus and conveyor 14 which forwards the moistened wheat to a wheat silo 15. The wheat is moistened by water from a water conduit 16 being sprayed over the wheat, and such moistening facilitates the following milling of the wheat. By the moistening the water conduit of the grain (grain kernel) will be increased by 2 to 3 %, and this moistening should take place 10 to 15 hs before milling. During this period the moistened wheat is stored in the wheat silo which can be provided with a level monitor and associated control equipment in order to maintain the predetermined level in the wheat silo. By providing a so called "plug flow" it is secured that each grain kernel will have the desired duration of stay in the silo. From the wheat silo 15 the wheat is supplied to a mill 17 which preferably comprises a so called turbo-mill having very short throughput time. Such a mill effects the necessary gentle milling of the wheat. The completely milled wheat is supplied to a cyclone apparatus 18 for separating lighter contaminations, if any, and from the bottom outlet of the cyclone apparatus the wheat is supplied to a centrifugal sift 19 wherein bran particles larger than 0.3 mm are separated from the wheat and by means of a conveyor 20 are fed to a conduit 21 to be forwarded to a wet silo outside the process premises. The flour including bran particles having a particle size less than 0.3 mm is fed through a conduit 22 to a mixer 23 to which water is supplied from a water conduit 16 for mixing flour and water in the proportion 1:1.5 (the water can be heated, if necessary, to a temperature of 30°C). By means of a pump 24 the flour suspension is forwarded to a turbo-mixer (disintegrator) 25 in which the suspension is homogenized and gluten, salts, and fat are released from the starch particles. The homogenized suspension passes to a first decanter centrifuge 26 in which the suspension is separated into the lighter fraction containing in addition to gluten, salts, and fat, starch particles of a minor size and lower quality, so called B-starch. This type of starch comprises about 20 % of the total amount of starch. Said lighter fraction is fed to a tank 27 from which it is forwarded through a conduit 28 to a wet feed tank outside the process premises. Before the lighter fraction is received by the tank 27 gluten may be precipitated in the suspension by lowering the temperature and be separated by straining. The fraction of the starch which comprises the major particles and is of a better quality is termed A-starch and has after having passed the decanter centrifuge 26 it has a solids content of about 50 to 60 %. In the outlet of the decanter centrifuge water is supplied from the water conduit 16 to dilute the A-starch to a solids content of about 10 %. The diluting water should be of drinking-water quality and should have a temperature of less than 15°C. The thin starch suspension is fed to a centrifugal strainer 29, preferably a rotating conical strainer having an aperture size ranging from 50 to 100 µm, for separating fibres which are fed to the tank 27 in order to be forwarded to the wet feed tank together with the lighter fraction from the decanter centrifuge 26. The strained A-starch suspension is conveyed by means of a pump 30 to a second decanter centrifuge 31 wherein water is separated while the starch is being washed and the solids content is again increased to about 50 to 60 %. By supply of water from the water conduit 16 the solids content in most cases is adjusted to 40 to 45 % in order that the starch can be handled more easily. This A-starch suspension is stored in a tank 32 the wash water supplied before straining and separated again in the decanter centrifuge 31 being fed to a tank 33 for wash water to be forwareded through a conduit 34 to a pond or storage tank outside the process premises in order to be used later for watering fields. The pond or storage tank should be sufficient large so as to receive the amount of wash water separated during operation of the plant over half a year because the demand for this water for watering purposes exists during the summer half only.

The starch suspension in the tank 32 is fresh goods and should be handled as such. It can be transported by means of tank truck to the factories where it is to be used for the manufacture of products or for refining. The wet feed obtained as a by-product can be used as feed for the production of animal foods.

The process described can be worked continuously, i.e. wheat is supplied to the front end and is processed to starch suspension or by-products, respectively, with a duration time in the plant of one minute or two. Since the process moreover can be worked in a closed system and there is no return of material in countercurrent - all material flows are directed in concurrent from the front end towards the final end of the process - the risk of infection will be minimized and a high quality of the products will be secured, which is important particulary with regard to the delicate starch slurry (fresh product). As a further measure in order to prevent infection of the starch hydrochloric acid can be dosed into the tank 32 when the tank is being filled with the starch slurry, in order to lower the pH value to 3.5 to 4.0. No other chemicals need to be used in the process in order to prevent infection. The process can easily by automized with a minimum of control and thus with a minimum of supervisory personnel.

The following example illustrate the output in the method according to the invention:

Wheat is supplied to the mill in an amount of 1710 kg/h the components of this amount wheat being 270 kg water, 1077 kg starch, and 363 kg other solids. During the sifting bran is separated in an amount of 419 kg/h (63 kg water, 172 kg starch, and 184 kg other solids). The total amount of water supplied during the process (including the water used for adjusting the solids contents of the final product) amounts to 6480 kg/h. The material separated in the first centrifugation and in the straining is mixed with the bran to a wet feed having a solids content of 26 %, and this wet feed is obtained in an amount of 2939 kg/h (2175 kg water, 412 kg starch, and 352 kg other solids 186 kg of which is protein). From the second centrifugation there is obtained wash water in an amount of 3801 kg/h (3749 kg water, 45 kg starch and 7 kg other solids). The wash water has a solids content of 1.4 %. The final product, a slurry of A-starch, is obtained in an amount of 1434 kg /h (810 kg water, 620 kg starch, and 4 kg other solids) and has a solids content of 43.5 %.

The method of the invention can be applied not only to wheat as in the illustrative embodiment but also to other kinds of grain, including corn.

Under certain conditions it is possible to influence output and quality by suppling enzymes to the process.

## Claims

1. Method for continuous recovery of starch from grain, wherein the grain is dry milled in a single step, the flour obtained, possibly after separation of husk, is mixed with water and the suspension obtained after homogenization is treated further in a decanter centrifuge, wherein the homogenized suspension directly after the homogenization in a first decanter centrifugal step is separated into a lighter phase containing in addition to gluten, fibres, salts and fat also minor starch particles, which is removed from the process for use as feed, and a heavier phase containing major starch particles, and that the latter heavier phase after dilution with water and following straining is concentrated in a second decanter centrifugal step under separation of wash water to a suspension or paste having a solids content ranging from 40 to 60 %, said suspension or paste possibly after adjustment of the solids content to a lower value by addition of water constitutes the final product in the process.

2. Method as in claim 1 wherein the treatment period in the process from stored grain to output starch suspension or paste having a solids content ranging from 40 to 60 %, is less than two minutes.

3. Method as claimed in claim 1 or 2 wherein all material flows in the process are directed from the front end of the process to the final end thereof.

4. Method as in any of claims 1 to 3 wherein dilution water of drinking-water quality and at a temperature lower than 15°C is supplied to the heavier fraction from the first decanter centrifugal step.

5. Method as in claim 4 wherein the diluted starch suspension is strained in a rotary conical strainer having apertures ranging from 50 to 100 µm.

6. Method as in any of claims 1 to 5 wherein the lighter fraction from the first decanter centrifugal step is mixed with husk from the strainer to a liquid feed.

7. Method as in any of claims 1 to 6 wherein gluten is participated in the lighter fraction from the first decanter centrifugal step by lowering the temperature and is separated by straining.

8. Method as in any of claims 1 to 7 wherein the water content of the grain 10 to 15 hours before milling is increased by 2 to 3 %.

## Patentansprüche

1. Verfahren zur kontinuierlichen Gewinnung von Stärke aus Getreide, wobei das Getreide in einem einzigen Schritt trockengemahlen, das, möglicherweise nach Abtrennung der Spelzen, erhaltene Mehl mit Wasser gemischt und die nach dem Homogenisieren erhaltene Suspension in einer Dekantierzentrifuge weiterbehandelt wird, wobei die homogenisierte Suspension direkt nach dem Homogenisieren in einen ersten Dekantierzentrifugen-Schritt in eine leichtere Phase, die zusätzlich zu Gluten, Fasern, Salzen und Fett auch geringfügige Stärketeilchen enthält, die zur Verwendung als Beschickung aus dem Verfahren abgeleitet wird, und eine schwerere Phase aufgeteilt wird, die wesentliche Stärketeilchen enthält, und die letztere schwerere Phase nach dem Verdünnen mit Wasser und nach dem Filtrieren in einem zweiten Dekantierzentrifugen-Schritt unter Abtrennung des Waschwassers zu einer Suspension oder Paste mit einem Feststoffgehalt im Bereich von 40 bis 60% konzentriert wird, wobei diese Suspension oder Paste, möglicherweise nach einer Einstellung des Feststoffgehalts auf einen geringeren Wert durch den Zusatz von Wasser, das Endprodukt in diesem Verfahren darstellt.

2. Verfahren nach Anspruch 1, wobei der Behandlungszeitraum im Verfahren vom gelagerten Getreide bis zur abgegebenen Stärkesuspension oder -paste mit einem Feststoffgehalt im Bereich von 40 bis 60% weniger als 2 Minuten beträgt.

3. Verfahren nach Anspruch 1 oder 2, wobei alle Materialströme im Verfahren vom Beginn des Verfahrens zu dessen Ende gerichtet sind.

4. Verfahren nach einem der Ansprüche 1 bis 3, wobei der schwereren Fraktion vom ersten Dekantierzentrifugen-Schritt Verdünnungswasser mit Trinkwasserqualität und einer Temperatur von weniger als 15°C zugeführt wird.

5. Verfahren nach Anspruch 4, wobei die verdünnte Stärkesuspension in einem rotierenden konischen Filter mit Öffnungen im Bereich von 50 bis 100 µm filtriert wird.

6. Verfahren nach einem der Ansprüche 1 bis 5, wobei die leichtere Fraktion vom ersten Dekantierzentrifugen-Schritt mit Spelzen vom Filter zu einer flüssigen Beschickung vermischt wird.

7. Verfahren nach einem der Ansprüche 1 bis 6, wobei Gluten durch Verringerung der Temperatur zur leichteren Fraktion vom ersten Dekantierzentrifugen-Schritt gehört und durch Filtrieren abgetrennt wird.

8. Verfahren nach einem der Ansprüche 1 bis 7, wobei der Wassergehalt des Getreides 10 bis 15 Stunden vor dem Mahlen um 2 bis 3% erhöht wird.

## Revendications

1. Procédé pour la récupération continue d'amidon de graines, dans lequel les graines sont broyées à sec lors d'une étape unique, la farine étant extraite, éventuellement après séparation des spathes, est mélangée à de l'eau et la suspension obtenue après homogénéisation étant soumise à un traitement supplémentaire dans une centrifugeuse de décantation, la suspension homogénéisée étant obtenue directement après l'étape d'homogénéisation dans une première centrifugeuse de décantation étant séparé pour donner une phase plus légère contenant, en plus du gluten, des fibres, des sels et des corps gras, également des particules d'amidon en proportion mineure, qui sont enlevées du processus pour être utilisées comme aliment, et une phase plus lourde contenant des particules d'amidon en une proportion majeure, et en ce que la dernière phase, plus lourde, après dilution avec de l'eau et tamisage-filtration subséquente est concentrée dans une deuxième étape de centrifugation en décanteuse, avec séparation de l'eau de lavage, pour donner une suspension ou une pâte ayant une teneur en solides située dans la plage allant de 40 à 60 %, ladite suspension ou pâte éventuellement après ajustement de la teneur en solides à une valeur inférieure par addition d'eau, constituant le produit final destiné au procédé.

2. Procédé selon la revendication 1, dans lequel la période de traitement dans le procédé allant de la fourniture de grains à la production de suspension ou de pâte d'amidon d'une teneur en solides située dans la plage allant de 40 à 60 % et inférieure à 2 mm.

3. Procédé selon la revendication 1 ou 2, dans lequel la totalité du matériau s'écoulant dans le processus est dirigé de l'extrémité avant du processus à son extrémité finale.

4. Procédé selon l'une quelconque des revendications 1 à 3, dans lequel l'eau de dilution, qui est d'une qualité d'eau potable et à une température inférieure à 15 °C, est fournie à la fraction la plus lourde obtenue depuis la première étape de centrifugation en décanteuse.

5. Procédé selon la revendication 4, dans lequel la suspension d'amidon diluée est filtrée-tamisée dans un filtre conique rotatif ayant des ouvertures d'une taille allant de 30 à 100 µm.

6. Procédé selon l'une quelconque des revendications 1 à 5, dans lequel la fraction plus légère venant de la première étape de centrifugation en appareil à décanter est mélangée avec des spathes venant du filtre pour donner un aliment liquide.

7. Procédé selon l'une quelconque des revendications 1 à 6, dans lequel le gluten est impliqué dans la fraction plus légère issue de la première étape de centrifugation en appareil à décanter, en abaissant la température et est séparée par filtration.

8. Procédé selon l'une quelconque des revendications 1 à 7, dans lequel la teneur en eau des grains est augmentée de 2 à 3 %, 10 à 15 heures avant le broyage.
